# EUROPEAN PATENT SPECIFICATION

(11) **EP 3 988 383 B1**
(45) Date of publication and mention of the grant of the patent: **22.07.2026**
(21) Application number: 21189229.4
(22) Date of filing: 02.08.2021
(51) Int. Cl.: B60L 53/60, H02J 7/02, H02J 9/00

(54) **POWER-SUPPLY CIRCUIT FOR CHARGING STATION**
STROMVERSORGUNGSSCHALTUNG FÜR LADESTATION
CIRCUIT D'ALIMENTATION ÉLECTRIQUE POUR STATION DE CHARGE

(30) Priority: 26.10.2020 CN 202022424560 U
(43) Date of publication of application: 27.04.2022
(73) Proprietor: Sungrow Power Supply Co., Ltd., Hefei, Anhui 230088 (CN)
(72) Inventor: CHEN, Xin, Hefei, Anhui, 230088 (CN); YANG, Yuefeng, Hefei, Anhui, 230088 (CN); XU, Linchong, Hefei, Anhui, 230088 (CN)
(74) Representative: Biallo, Dario

(56) References cited:
- CN-A- 105 553 061
- CN-A- 108 162 782
- CN-A- 110 171 307
- CN-A- 111 483 344
- CN-U- 210 007 455
- CN-U- 213 753 998
- US-A1- 2023 352 861

## Description

### FIELD

The present disclosure relates to the technical field of charging stations, and in particular to a power-supply circuit for a charging station.

### BACKGROUND

The charging station, whose function is similar to the fuel dispenser in a gas station, can be fixed on the ground or wall, and can be installed in public (e.g. public buildings, shopping malls, public parking lots, etc.), residential community parking lots, and charging park. It can charge electric vehicles of various types according to different voltage levels.

The charging station enters a standby state after it stops charging the electric vehicle. In the standby state, the charging station also supplies power to the controlled device in itself, such as the auxiliary power supply, DC electricity meter and other devices. Thus, at this time, the controlled device still consumes electric energy, which causes the charging station to consume much energy in the standby state, and leads to an increase in the proportion of reactive power of the grid and an increase in the reactive current of the grid, thus reducing the power supply capacity of the grid.

Patent Applicant CN 210007455U discloses an electric vehicle charging device suitable for a bus or logistics station. The charging device comprises a plurality of charging guns, a switch matrix comprises a plurality of charging path groups, each charging path group is provided with a charging path, each charging path is provided with a relay, and the control end of each relay is connected with a control module; the power supply module comprises a plurality of charging module groups, each charging module group is connected with an auxiliary alternating current contactor, and the control end of each auxiliary alternating current contactor is connected with the control module; each charging module group comprises at least one charging module; and the output end of each charging module is connected with each charging access group, so that the purposes of flexibly arranging the charging guns to reduce the requirements on sites to the maximum extent, realizing different charging strategies under different conditions, ensuring the temporary scheduling requirements, effectively reducing the power consumption cost and maximizing the economic and social benefits of equipment are achieved. Patent Applicant CN 105553061A discloses a DC charging pile control system. The DC charging pile control system comprises an AC power supply, a circuit breaker, an AC contactor and a charging module, wherein the AC power supply is connected with the circuit breaker, the circuit breaker is connected with the AC contactor, the AC contactor is connected with the charging module, the control system also comprises a master controller, a switching power supply, a button switch, an intermediate relay KA1, an intermediate relay KA2 and a fan, the button switch is connected with the intermediate relay KA1, the intermediate relay KA1 is connected with the switching power supply, the switching power supply is connected with the master controller, the master controller is connected with the intermediate relay KA2, and the intermediate relay KA2 is connected with coils of the fan and the AC contactor respectively. The DC charging pile control system is more automatic in operation, and the reliability of the system is improved; the damage rate of components on device maintenance is reduced, and the maintenance cost is reduced; the standby power consumption of the charging module is reduced from the aspect of energy saving; and from the aspect of safety protection, the operation of a worker on a high-voltage component is reduced.

### SUMMARY

In view of this, a power-supply circuit for a charging station is provided according to embodiments of the present disclosure, so as to solve the problem that the power supply capacity of the grid decreases due to the charging station consuming much energy in the standby state.

To solve the above technical problems, technical solutions are provided according to the embodiments of the present disclosure as follows.

A power-supply system for a charging station includes includes a power-supply circuit, a first auxiliary power supply and a target controlled device, wherein the power-supply circuit includes:
a control module and an on-off module; wherein, a first input terminal of the first auxiliary power supply is directly connected to a first phase of three-phase alternating current of a grid; a second input terminal of the first auxiliary power supply is directly connected to a neutral wire of the grid; the first auxiliary power supply is configured to supply power to the power-supply circuit, and
a control terminal of the on-off module is connected to the control module; an input terminal of the on-off module is at least connected to the first phase of the three-phase alternating current of the grid; an output terminal of the on-off module is connected to a target controlled device; the target controlled device comprises at least one of a charging module, a second auxiliary power supply, a DC electricity meter, and a fan.

In an optional embodiment, the target controlled device includes the second auxiliary power supply and the DC electricity meter;
the on-off module comprises a first relay, and
an input terminal of the first relay is connected to the first phase of the three-phase alternating current of the grid, and an output terminal of the first relay is connected to a first input terminal of the second auxiliary power supply and a first input terminal of the DC electricity meter; a second input terminal of the second auxiliary power supply and a second input terminal of the DC electricity meter are connected to the neutral wire of the grid.

In an optional embodiment, the circuit further includes an air switch; wherein,
two input terminals of the air switch are respectively connected to the first phase of the three-phase alternating current of the grid and the neutral wire of the grid; a first output terminal of the air switch is connected to the input terminal of the first relay; a second output terminal of the air switch is connected to the second input terminal of the first auxiliary power supply, the second input terminal of the second auxiliary power supply, and the second input terminal of the DC electricity meter.

In an optional embodiment, the first relay is an AC relay, and the air switch is an air switch with leakage protection.

In an optional embodiment, the target controlled device includes the charging module, and the on-off module comprises a contactor, and
three input terminals of the contactor are respectively connected to three phases of the three-phase alternating current of the grid; three output terminals of the contactor are connected to the charging module.

In an optional embodiment, the power-supply circuit further includes a circuit breaker; wherein,
three input terminals of the circuit breaker are respectively connected to the three phases of the three-phase alternating current of the grid; three output terminals of the circuit breaker are respectively connected to the three input terminals of the contactor.

In an optional embodiment, the contactor is an AC contactor.

In an optional embodiment, the target controlled device includes the fan; the on-off module includes a second relay, and
an input terminal of the second relay is connected to the first output terminal of the air switch, and an output terminal of the second relay is connected to the fan.

In an optional embodiment, the second relay is an AC relay.

In an optional embodiment, the control module includes an off-board charger controller.

A charging apparatus, including the above power-supply circuit.

A charging station, including the above charging apparatus and a charging connector; wherein, the control module, the charging module, and the second auxiliary power supply are connected to the charging connector.

In an optional embodiment, two output terminals of the charging module are connected to the charging connector through a preset contactor; two output terminals of the second auxiliary power supply are connected to the charging connector through a preset relay.

Compared with the prior art, the embodiments of the present disclosure has the following beneficial effects:

The power-supply circuit for a charging station provided in this disclosure includes a control module, an on-off module, and a first auxiliary power supply. A control terminal of the on-off module is connected to the control module; an input terminal of the on-off module is connected to the grid; an output terminal of the on-off module is connected to a target controlled device. When the charging station is in the standby state, the control module controls the on-off module to be disconnected, so that the target controlled device, such as at least one of the charging module, the second auxiliary power supply, the DC electricity meter, and the fan, is no longer powered on. In this way, the energy consumption of the target controlled device during the charging station being in the standby state is saved, and the power supply capacity of the grid is improved.

### BRIEF DESCRIPTION OF THE DRAWINGS

For illustration of the technical solutions according to embodiments of the present disclosure or conventional techniques in detail, hereinafter briefly described are the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.
Figure 1 is a schematic structural diagram of a power-supply circuit for a charging station according to an embodiment of the present disclosure;
Figure 2 is a schematic structural diagram of a power-supply circuit for a charging station according to an embodiment of the present disclosure;
Figure 3 is a schematic structural diagram of a power-supply circuit for a charging station according to an embodiment of the present disclosure;
Figure 4 is a schematic structural diagram of a power-supply circuit for a charging station according to an embodiment of the present disclosure;
Figure 5 is a schematic structural diagram of a power-supply circuit for a charging station according to an embodiment of the present disclosure, and
Figure 6 is a schematic structural diagram of a power-supply circuit for a charging station according to an embodiment of the present disclosure.

### DETAILED DESCRIPTION OF EMBODIMENTS

Hereinafter technical solutions in embodiments of the present disclosure are described in details in conjunction with the drawings in embodiments of the present disclosure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

After stopping charging an electric vehicle, the charging station enters a standby state. In the standby state, the charging station also supplies power to the controlled device in itself, such as the auxiliary power supply, DC electricity meter and other devices. At this time, the controlled device consumes electric energy, which causes the charging station to consume much energy in the standby state, and leads to an increase in the proportion of reactive power of the grid and an increase in the reactive current of the grid, thus reducing the power supply capacity of the grid.

In order to solve the problem of the charging station still consuming much energy in the standby state, the inventor has found that, if the controlled device is not powered on when the charging station being in the standby state, the controlled device will not consume power. Thus, the power consumed by the controlled device can be saved, thereby reducing the electric energy consumed by the charging station in the standby state.

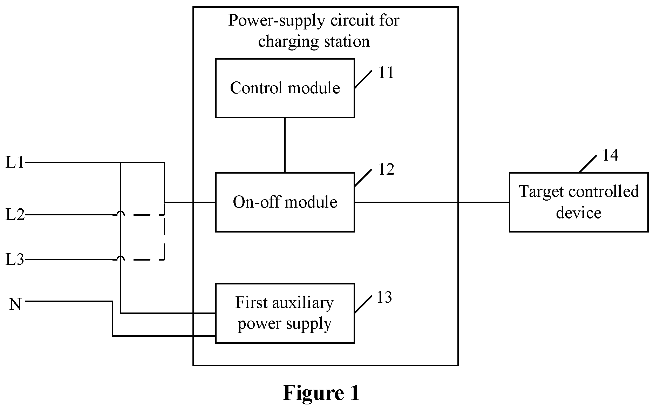

Based on the above, a power-supply circuit for a charging station is provided by an embodiment of the present disclosure. Reference is made to Figure 1, in which the circuit may include a control module 11, a first auxiliary power supply 13 and an on-off module 12.

A first input terminal of the first auxiliary power supply 13 is connected to a first phase L1 of three-phase alternating current of a grid. A second input terminal of the first auxiliary power supply 13 is connected to a neutral wire N of the grid. The first auxiliary power supply 13 is configured to supply power to the power-supply circuit.

The control module 11 in this embodiment may be an off-board charger controller. In addition, instead of being connected to the first phase L1 of the three-phase alternating current of the grid, the first input terminal of the first auxiliary power supply 13 may be connected to a second phase L2 or a third phase L3 of the three-phase alternating current of the grid.

In addition, on the basis of the prior art, instead of using one auxiliary power supply in the prior art, two auxiliary power supplies are used in the embodiment of the present disclosure. One of the auxiliary power supplies is the first auxiliary power supply 13, which is configured to supply power to the power-supply circuit for the charging station. The other auxiliary power supply is a second auxiliary power supply, which is configured to supply power to an auxiliary power supply of the vehicle-side battery management system (BMS). In this way, during the charging station being in the standby state, the second auxiliary power supply can be disconnected, so that the second auxiliary power supply does not consume electric energy.

In this embodiment of the present disclosure, a control terminal of the on-off module 12 is connected to the control module 11. An input terminal of the on-off module 12 is at least connected to the first phase L1 of the three-phase alternating current of the grid. An output terminal of the on-off module 12 is connected to a target controlled device 14. The target controlled device 14 at least includes at least one of a charging module, a second auxiliary power supply, a DC electricity meter, and a fan.

In practice, the on-off module 12 may be various switches, such as a relay, a contactor, etc., to realize the on-off between the target controlled device 14 and the grid. Given by different types of the on-off module 12, the manners of how the on-off module 12 is connected to the grid are different. In a case that the on-off module 12 is a relay, the input terminal of the relay is connected to the first phase L1 of the three-phase alternating current of the grid. In a case that the on-off module 12 is a contactor, three input terminals of the contactor are respectively connected to three phases of the three-phase alternating current of the grid. Regardless of the connecting manner between the on-off module 12 and the grid, as long as the on-off module 12 is disconnected, the grid is disconnected from the target controlled device 14, so that the target controlled device 14 no longer consumes electric energy.

In the embodiment of the present disclosure, during the charging station being in the standby state, at least one of the charging module, the second auxiliary power supply, the DC electricity meter, and the fan is disconnected. For a maximum energy saving, the charging module, all of the second auxiliary power supply, the DC electricity meter, and the fan can be disconnected.

In the embodiment of the present disclosure, according to the above, the power-supply circuit for a charging station includes the control module 11, the first auxiliary power supply 13 and the on-off module 12. The control terminal of the on-off module 12 is connected to the control module 11; the input terminal of the on-off module 12 is connected to the grid, and the output terminal of the on-off module 12 is connected to the target controlled device 14. According to the circuit disclosed herein, during the charging station being in the standby state, the control module 11 controls the on-off module 12 to disconnect, so as to cut the power supply to the target controlled device 14, such as at least one of the charging module, the second auxiliary power supply, the DC electricity meter and the fan. Thus, the energy consumption of powering the target controlled device 14, during the charging station being in the standby state, is saved, and the power supply capacity of the grid is improved.

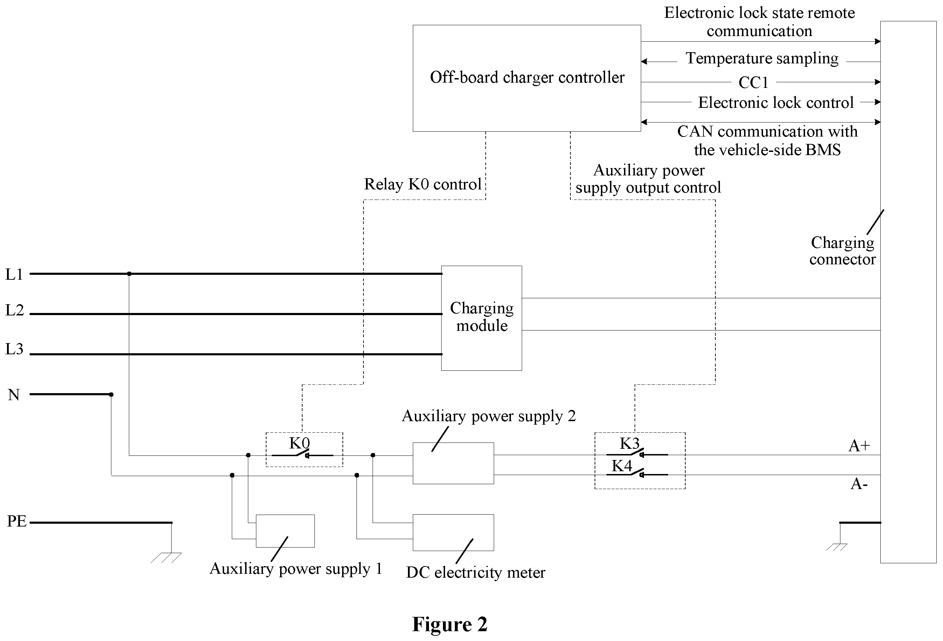

The above introduces the need to power off the target controlled device 14 of different types. When the target controlled devices 14 are different, the configured on-off modules 12 are different. Specifically, the second auxiliary power supply (i.e., the auxiliary power supply 2 in Figure 2) and the DC electricity meter share a same on-off module 12, and the charging module and the fan each uses an on-off module 12. Specifically, as referred to Figures 2 to 6, the implementation of the target controlled device 14 and the on-off module 12 is introduced in the following.
1. The target controlled device 14 includes the second auxiliary power supply, and the DC electricity meter, and the on-off module 12 includes a first relay K0.

As referred to Figure 2, an input terminal of the first relay K0 is connected to the first phase of the three-phase alternating current of the grid, and an output terminal of the first relay K0 is connected to a first input terminal of the second auxiliary power supply and a first input terminal of the DC electricity meter. A second input terminal of the second auxiliary power supply and a second input terminal of the DC electricity meter are connected to the neutral wire N of the grid. Two terminals of the second auxiliary power supply respectively output A+ and A- signals to the charging connector through a relay K3 and a relay K4, so as to supply power to the auxiliary power supply of the vehicle-side BMS. The on-off of the relay K3 and the relay K4 is controlled by the off-board charger controller through an auxiliary power output control line. When there is no need to supply power to the auxiliary power supply of the vehicle BMS, the relay K3 and the relay K4 are disconnected.

The off-board charger controller can realize the on-off control of the first relay K0 through a control line, such as the control line for the relay K0 in Figure 2. In practice, the first relay K0 may be an AC relay. During the charging station being in the standby state, a command of disconnection is output through the control line to disconnect the AC relay. After the AC relay is disconnected, the second auxiliary power supply and the DC electricity meter are no longer powered on, thereby electric energy is saved.

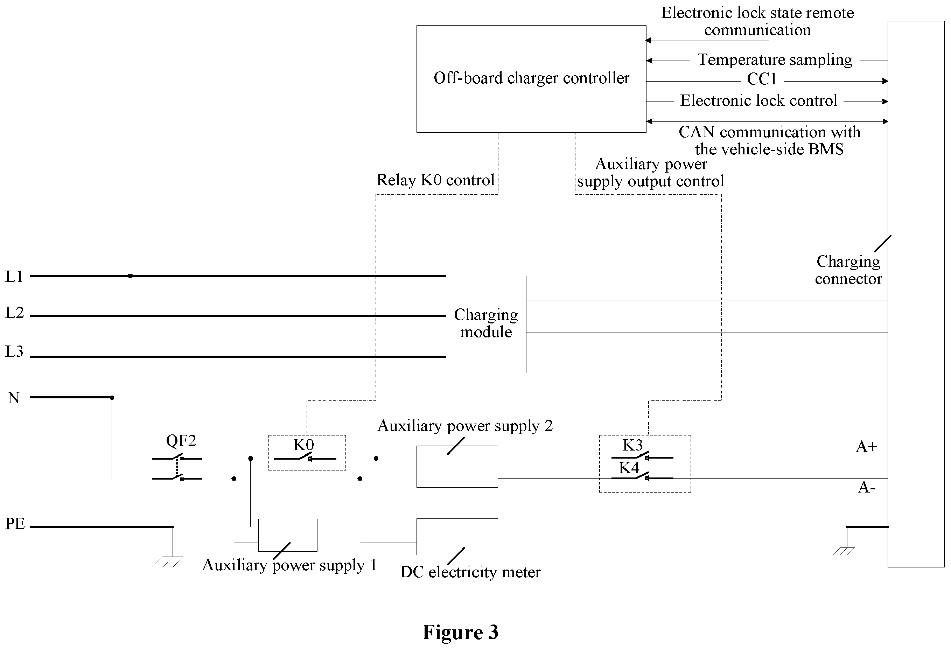

In an embodiment of the present disclosure, as referred to Figure 3, for leakage protection and overcurrent protection of the line where the first relay K0 is located, an air switch QF2 may be configured on the line where the first relay K0 is located. The air switch QF2 is an air switch with leakage protection. The connection between the air switch QF2 and other devices is as follows.

Two input terminals of the air switch QF2 are, respectively, connected to the first phase of the three-phase alternating current of the grid and the neutral wire of the grid. A first output terminal of the air switch QF2 is connected to the input terminal of the first relay K0. A second output terminal of the air switch QF2 is connected to the second input terminal of the first auxiliary power supply 13 (i.e., auxiliary power supply 1 as shown in Figure 2 and Figure 3), the second input terminal of the second auxiliary power supply, and the second input terminal of the DC electricity meter.

When an overcurrent or leakage occurs in the air switch QF2, the air switch QF2 can be automatically disconnected, thereby protecting the first auxiliary power source 13, the second auxiliary power supply and the DC electricity meter, and ensuring the safety of the line where the air switch QF2 is located.

2. The target controlled device 14 includes the charging module, and the on-off module 12 includes a contactor KM1.

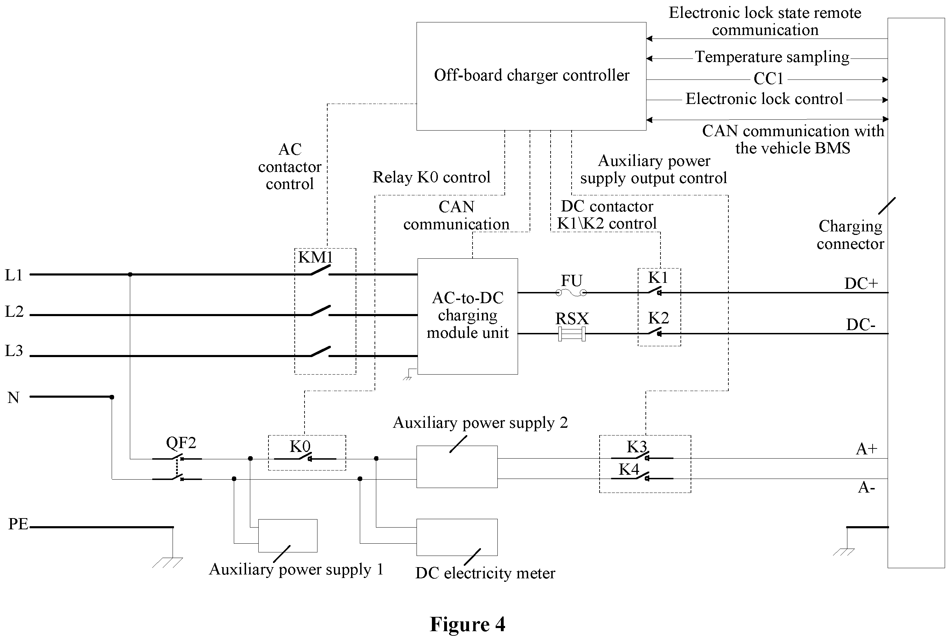

In an embodiment, the charging module is an AC-to-DC charging module unit as shown in Figure 4, and is configured to convert between alternating current and direct current.

An output terminal of the AC-to-DC charging module unit outputs a DC+ signal through a fuse FU and a contactor K1. Another output terminal of the AC-to-DC charging module unit outputs a DC- signal through a shunt RSX and a contactor K2. The DC+ signal and DC- signal are configured to power an onboard battery. The DC+ signal and DC- signal are high-voltage signals, and generally the voltage is about 600-700V. The A+ and A- signals are low-voltage signals, and generally the voltage is about 12-24V. In addition, the on-off of the contactor K1 and the contactor K2 is controlled by the off-board charger controller through a DC contactor K1\K2 control line. When there is no need to supply power to the onboard battery, the contactor K1 and the contactor K2 are disconnected.

In a case that the target controlled device is an AC-to-DC charging module unit, the on-off module 12 includes a contactor KM1. The three input terminals of the contactor KM1 are respectively connected to the three phases of the three-phase alternating current of the grid; the three output terminals of the contactor KM1 are connected to the AC-to-DC charging module unit.

In an embodiment, the contactor KM1 is an AC contactor. The off-board charger controller controls the AC contactor through the AC contactor control line. During the charging station being in the standby state, The off-board charger controller outputs a command of disconnection through the AC contactor control line. The AC contactor performs a disconnection operation in response to the command of disconnection. After the AC contactor is disconnected, the grid is disconnected from the AC-to-DC charging module unit, so that the AC-to-DC charging module unit is no longer powered on, thereby electric energy is saved.

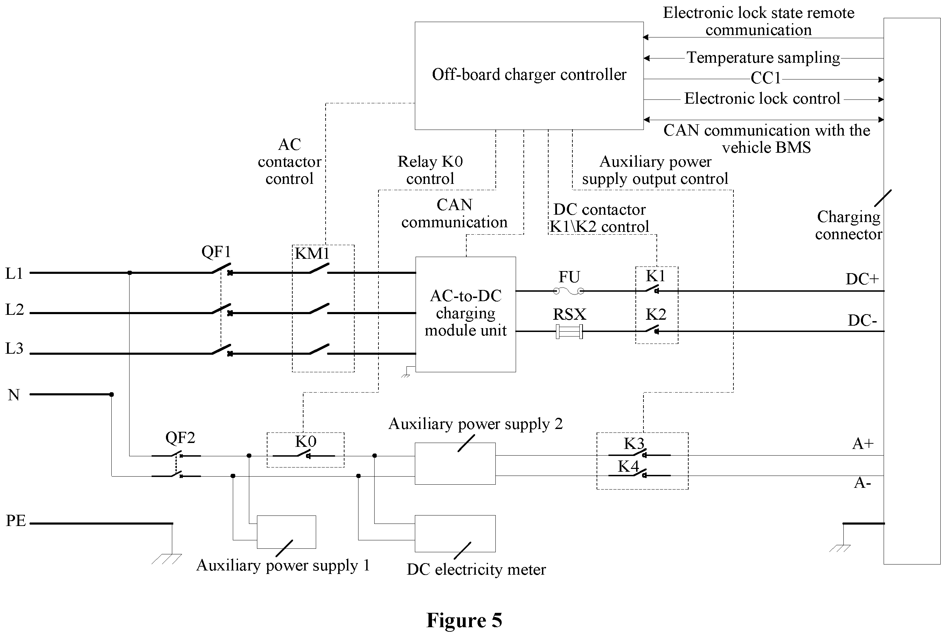

Based on the above embodiment, as referred to Figure 5, in order to realize the overcurrent protection and short-circuit protection of the line where the AC contactor is located, a circuit breaker QF1 may be provided at the front of the AC contactor. Three input terminals of the circuit breaker QF1 are respectively connected to the three phases of the three-phase alternating current of the grid; three output terminals of the circuit breaker QF1 are respectively connected to the three input terminals of the contactor KM1.

When an overcurrent or short circuit occurs in the branch where the circuit breaker QF1 is located, the circuit breaker QF1 is disconnected to protect the AC-to-DC charging module unit from being damaged and improve the safety of the device on the branch where the circuit breaker QF1 is located.

3. The target controlled device 14 includes the fan, and the on-off module 12 includes a second relay.

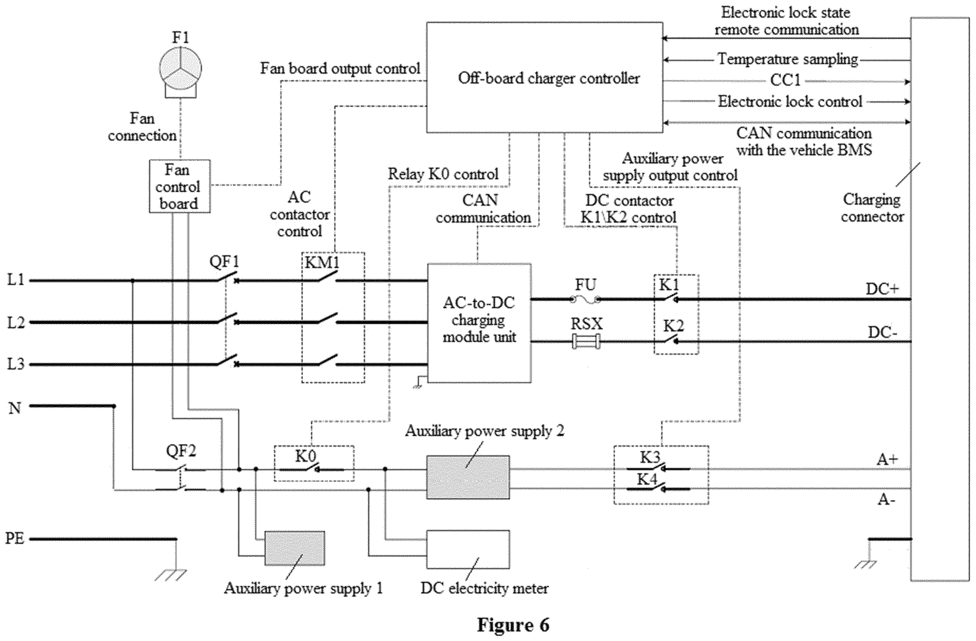

As shown in Figure 6, in a case that the target controlled device 14 includes the fan, the on-off module 12 includes a second relay. The second relay may be an AC relay. The connection between the second relay and the gird is similar to that between the first relay K0 and the grid. Specifically, an input terminal of the second relay is connected to a first output terminal of the air switch QF2, and an output terminal of the second relay is connected to the fan.

It should be noted that the second relay is provided in the fan control board in Figure 6, and the connection between the second relay and the grid is as described above. The on and off of the fan is controlled by the second relay. The fan in this embodiment may be a heating fan.

The off-board charger controller controls the second relay through a fan board output control line. During the charging station being in the standby state, the off-board charger controller outputs a command of disconnection through the fan board output control line. The second relay performs a disconnection operation in response to the command of disconnection. After the second relay is disconnected, the grid is disconnected from the fan, so that the fan is no longer powered on, thereby electric energy is saved.

In summary, the off-board charger controller can output a command of disconnection through a control line during the charging station being in the standby state, so that the first relay K0, the contactor KM1 and the second relay are disconnected and thus the second auxiliary power supply, the DC electricity meter, the charging module and the fan are no longer powered on, thereby the electric energy is saved. The number of the target controlled device to be disconnected may be determined according to the actual situation. If the electric energy is expected to be saved to the maximum extent, the second auxiliary power supply, DC electricity meter, charging module, and fan are all disconnected from the grid. If the electric energy is expected much to be saved, at least one of the second auxiliary power supply, DC electricity meter, charging module, and fan may be disconnected from the grid.

In addition to controlling the disconnection of the first relay K0, the contactor KM1 and the second relay, the off-board charger controller may also communicate with the AC-to-DC charging module unit through CAN communication, so as to learn a current state of the AC-to-DC charging module unit in time.

The off-board charger controller may also communicate with the charging connector to realize functions such as electronic lock state remote communication, temperature sampling, voltage output signal CC1 communication in the DC charging station connector, electronic lock control, and CAN communication with the vehicle-side BMS.

The technical solutions of the present disclosure may also be applicable to a single-phase LN grid. When the charging station is in the standby state, the off-board charger controller first outputs a shutdown signal to the AC-to-DC charging module unit through CAN communication, to control the AC-to-DC charging module unit to shut down, and then outputs a control signal to the KM1 control line to control the KM1 to be disconnected, to completely power off the AC-to-DC charging module unit. QF2 is an air switch with leakage protection. When the charging station is powered on, the air switch is closed. An output end of the AC relay K0 is connected to the auxiliary power supply 2 (i.e., the second auxiliary power supply) and the DC electricity meter. The off-board charger controller controls to open the AC relay K0 during the charging station being in the standby state, so as to cut the AC power supply to the auxiliary power supply 2 and the DC electricity meter. The output of auxiliary power supply 1 (i.e., the first auxiliary power supply) supplies power to the off-board charger controller. The input of auxiliary power supply 1, which is at the front of K0 and the behind of QF2, is connected to K0 and QF2. Auxiliary power supply 2 is a low-voltage auxiliary power supply for the electric vehicle.

During the charging station being in the standby state, the off-board charger controller controls the contactor KM1 to be open and the AC relay K0 to be open, so that the AC-to-DC charging module unit, the auxiliary power supply 2, and the electricity meter do not generate standby energy consumptions. During the charging station being in the standby state, only the auxiliary power supply 1 is always connected to the AC input of the charging station, and there is no cut-off switch at the front of the auxiliary power supply 1. The standby energy consumption of the charging station is only the energy consumption of the auxiliary power supply 1. During the charging station being in the standby state, K0 and KM1 are open, thus the input power supply for the charging module, the DC electricity meter, the auxiliary power supply at the vehicle-side, and fan are completely cut off, and the standby energy consumption of these devices is zero. This control logic is simple and clear, which greatly reduces the standby energy consumption of the entire charging station.

When a charging connector is inserted into a vehicle charging port and the off-board charger detects that the charging station is in a plug-in state, the off-board charger controller controls the contactor KM1 and relay K0 to be closed to supply power to the charging module, auxiliary power supply 2 and DC electricity meter. This control logic ensures that when the off-board charging station is in the standby state, the standby energy consumption of the entire charging station is relatively low.

The logic of the circuit in Figure 6 is mainly the following. Before the charging station is powered on for the first time, QF1 and QF2 are manually closed. And then the charging station is powered on and enters the standby state. When the charging station is in the standby state, KM1 and K0 are controlled to be open, the second relay in the fan control board is controlled by the off-board charger controller to be disconnected, and the fan F1 is in a power-off state. When the charging station is in the charging state, KM1 and K0 are controlled to be closed, the second relay in the fan control board is controlled by the off-board charger controller to be closed, and the fan F1 works.

Auxiliary power supply 1 and auxiliary power supply 2 are AC-to-DC power supplies. Auxiliary power supply 1 supplies power to the off-board charger controller, and auxiliary power supply 2 supplies power to the auxiliary power supply of the vehicle-side BMS.

In this embodiment, when the charging station is in the standby state, the AC contactor KM1 at the front of the AC-to-DC charging module unit is disconnected. Thus, the standby energy consumption of the AC-to-DC charging module unit is zero, which greatly reduces the standby energy consumption of the entire charging station. Two independent auxiliary power modules are configured to respectively supplying power to the off-board charger controller and the low-voltage auxiliary power supply at the vehicle side. During the charging station being in the standby state, the input power supply of the auxiliary power supply at the vehicle side is cut off, so that the standby energy consumption of the low-voltage auxiliary power supply is zero. During the charging station being in the standby state, the AC power supply of the DC electricity meter is cut off, so that the standby energy consumption of the electricity meter is zero. During the charging station being in the standby state, the off-board charger controller controls the fan control board to control the relay to be disconnected, so that the fan loses power. In this way, the standby energy consumption of the charging station is further reduced.

Based on the above embodiments of the power-supply circuit for the charging station, a charging apparatus is provided according to an embodiment of the present disclosure, which includes the power-supply circuit for the charging station described above.

In addition, based on the above power-supply circuit for the charging station and the charging apparatus, a charging station is provided according to an embodiment of the present disclosure, which includes the charging apparatus described above and a charging connector; the control module, the charging module, and the second auxiliary power supply are connected to the charging connector.

As shown in Figure 6, two output terminals of the charging module are connected to the charging connector through preset contactors, and two output terminals of the second auxiliary power supply are connected to the charging connector through preset relays.

Specifically, the charging module is the above AC-to-DC charging module unit. An output terminal of the AC-to-DC charging module unit outputs a DC+ signal through a fuse FU and a contactor K1. Another output terminal of the AC-to-DC charging module unit outputs a DC- signal through a shunt RSX and a contactor K2. The DC+ signal and DC- signal are configured to power an onboard battery. The contactor K1 and the contactor K2 are connected to the charging connector, and may be DC contactors.

Two terminals of the second auxiliary power supply, respectively, output A+ and A-signals to the charging connector through a relay K3 and a relay K4, so as to supply power to the auxiliary power supply of the vehicle-side BMS.

The control module may also communicate with the charging connector to realize functions such as electronic lock state remote communication, temperature sampling, voltage output signal CC1 communication in the DC charging station connector, electronic lock control, and CAN communication with the vehicle-side BMS.

In this embodiment, it can be realized that when the charging station is in the standby state, the control module controls the on-off module to be disconnected, so as to realize that the target controlled device, such as at least one of the charging module, the second auxiliary power supply, the DC electricity meter, and the fan, is no longer powered on. It saves the energy consumption of the target controlled device during the charging station being in the standby state, and improves the power supply capacity of the grid.

It should be noted that the specific functions and connections of various components in the charging apparatus and the charging station provided here can be referred to the corresponding descriptions in the above embodiments, and is not repeatedly described herein.

The above description of the embodiments enables those skilled in the art to implement or use the present disclosure. Various modifications to these embodiments are apparent to those skilled in the art, and the general principle defined herein may be implemented in other embodiments without deviating from the scope of the present disclosure.

## Claims

1. A power-supply system for a charging station comprising a power-supply circuit, a first auxiliary power supply (13) and a target controlled device (14), wherein the power-supply circuit comprises:
a control module (11) and an on-off module (12); **characterized in that** a first input terminal of the first auxiliary power supply (13) is directly connected to a first phase of three-phase alternating current of a grid; a second input terminal of the first auxiliary power supply (13) is directly connected to a neutral wire of the grid; the first auxiliary power supply (13) is configured to supply power to the power-supply circuit, and
a control terminal of the on-off module is connected to the control module (11); an input terminal of the on-off module (12) is at least connected to the first phase of the three-phase alternating current of the grid; an output terminal of the on-off module (12) is connected to a target controlled device (14); the target controlled device comprises at least one of a charging module, a second auxiliary power supply, a DC electricity meter, and a fan.

2. The circuit according to claim 1, wherein the target controlled device (14) comprises a second auxiliary power supply and a DC electricity meter;
the on-off module (12) comprises a first relay, and
an input terminal of the first relay is connected to the first phase of the three-phase alternating current of the grid, and an output terminal of the first relay is connected to a first input terminal of the second auxiliary power supply and a first input terminal of the DC electricity meter; a second input terminal of the second auxiliary power supply and a second input terminal of the DC electricity meter are connected to the neutral wire of the grid.

3. The system according to claim 2, the power-supply circuit further comprising an air switch; wherein,
two input terminals of the air switch are, respectively, connected to the first phase of the three-phase alternating current of the grid and the neutral wire of the grid; a first output terminal of the air switch is connected to the input terminal of the first relay; and a second output terminal of the air switch is connected to the second input terminal of the first auxiliary power supply, the second input terminal of the second auxiliary power supply, and the second input terminal of the DC electricity meter.

4. The system according to claim 3, wherein the first relay is an AC relay, and the air switch is an air switch with leakage protection.

5. The system according to claim 1, wherein the target controlled device (14) further comprises a charging module, and the on-off module (12) further comprises a contactor, and
three input terminals of the contactor are respectively connected to three phases of the three-phase alternating current of the grid; three output terminals of the contactor are connected to the charging module.

6. The system according to claim 5, wherein the power-supply circuit further comprises a circuit breaker; wherein,
three input terminals of the circuit breaker are respectively connected to the three phases of the three-phase alternating current of the grid; three output terminals of the circuit breaker are respectively connected to the three input terminals of the contactor.

7. The system according to claim 5, wherein the contactor is an AC contactor.

8. The system according to claim 3, wherein the target controlled device (14) further comprises a fan; the on-off module (12) further comprises a second relay, and
an input terminal of the second relay is connected to the first output terminal of the air switch, and an output terminal of the second relay is connected to the fan.

9. The system according to claim 8, wherein the second relay is an AC relay.

10. The system according to claim 1, wherein the control module (11) comprises an off-board charger controller.

11. A charging station, comprising the system according to any one of claims 1-10 and a charging connector; wherein, the control module, the charging module, and the second auxiliary power supply are connected to the charging connector.

12. The charging station according to claim 11, wherein
two output terminals of the charging module are connected to the charging connector through a contactor; two output terminals of the second auxiliary power supply are connected to the charging connector through a relay.

## Patentansprüche

1. Stromversorgungssystem für eine Ladestation, das eine Stromversorgungsschaltung, eine erste Hilfsstromversorgung (13) und eine zielgesteuerte Vorrichtung (14) umfasst, wobei die Stromversorgungsschaltung Folgendes umfasst:
ein Steuermodul (11) und ein Ein-Aus-Modul (12); **dadurch gekennzeichnet, dass** ein erster Eingangsanschluss des ersten
die Hilfsstromversorgung (13) ist direkt mit einer ersten Phase des Drehstroms eines Netzes verbunden; ein zweiter Eingangsanschluss der ersten Hilfsstromversorgung (13) ist direkt mit dem Neutralleiter des Netzes verbunden; die erste Hilfsstromversorgung (13) ist so ausgelegt, dass sie die Stromversorgungsschaltung mit Strom versorgt, und
ein Steueranschluss des Ein-Aus-Moduls ist mit dem Steuermodul (11) verbunden; ein Eingangsanschluss des Ein-Aus-Moduls (12) ist zumindest mit der ersten Phase des dreiphasigen Wechselstroms des Netzes verbunden; ein Ausgangsanschluss des Ein-Aus-Moduls (12) ist mit einem zu steuernden Zielgerät (14) verbunden; das zusteuernde Gerät umfasst mindestens eines aus einem Lademodul, einer zweiten Hilfsstromversorgung, einem DC-Stromzähler und einem Lüfter.

2. Schaltung nach Anspruch 1, wobei die zielgesteuerte Vorrichtung (14) eine zweite Hilfsstromversorgung und einen DC-Stromzähler umfasst;
das Ein-Aus-Modul (12) umfasst ein erstes Relais, und
Ein Eingangsanschluss des ersten Relais ist mit der ersten Phase des dreiphasigen Wechselstroms des Netzes verbunden, und ein Ausgangsanschluss des ersten Relais ist mit einem ersten Eingangsanschluss der zweiten Hilfsstromversorgung und einem ersten Eingangsanschluss des DC-Stromzählers verbunden; ein zweiter Eingangsanschluss der zweiten Hilfsstromversorgung und ein zweiter Eingangsanschluss des DC-Stromzählers sind mit dem Neutralleiter des Netzes verbunden.

3. System nach Anspruch 2, wobei die Stromversorgungsschaltung ferner einen Luftschalter umfasst; wobei
Zwei Eingangsanschlüsse des Luftschalters sind jeweils mit der ersten Phase des dreiphasigen Wechselstroms des Netzes und dem Neutralleiter des Netzes verbunden; ein erster Ausgangsanschluss des Luftschalters ist mit dem Eingangsanschluss des ersten Relais verbunden; und ein zweiter Ausgangsanschluss des Luftschalters ist mit dem zweiten Eingangsanschluss der ersten Hilfsstromversorgung, dem zweiten Eingangsanschluss der zweiten Hilfsstromversorgung und dem zweiten Eingangsanschluss des DC-Stromzählers verbunden.

4. System nach Anspruch 3, wobei das erste Relais ein DC-Stromzähler ist und der Luftschalter ein Luftschalter mit Fehlerstromschutz ist.

5. System nach Anspruch 1, wobei die zielgesteuerte Vorrichtung (14) ferner ein Lademodul umfasst und das Ein-Aus-Modul (12) ferner ein Schütz umfasst, wobei drei Eingangsanschlüsse des Schützes jeweils mit drei Phasen des dreiphasigen Wechselstroms des Netzes verbunden sind; drei Ausgangsanschlüsse des Schützes sind verbunden an das Lademodul.

6. System nach Anspruch 5, wobei die Stromversorgungsschaltung ferner eine Leistungsschalter; wobei,
die drei Eingangsklemmen des Leistungsschalters sind jeweils mit den drei Phasen des dreiphasigen Wechselstroms des Netzes verbunden; die drei Ausgangsklemmen des Leistungsschalters sind jeweils mit den drei Eingangsklemmen des Schützes verbunden.

7. System nach Anspruch 5, wobei es sich bei dem Schütz um ein AC-Stromschütz handelt.

8. System nach Anspruch 3, wobei die gesteuerte Zielvorrichtung (14) ferner einen Lüfter umfasst; das Ein-Aus-Modul (12) ferner ein zweites Relais umfasst, wobei
ein Eingangsanschluss des zweiten Relais mit dem ersten Ausgangsanschluss des Luftschalters verbunden ist und ein Ausgangsanschluss des zweiten Relais mit dem Lüfter verbunden ist.

9. System nach Anspruch 8, wobei das zweite Relais ein AC-Stromschütz ist.

10. System nach Anspruch 1, wobei das Steuermodul (11) einen externen Laderegler umfasst.

11. Ladestation, die das System gemäß einem der Ansprüche 1-10 und einen Ladeanschluss umfasst; wobei das Steuermodul, das Lademodul und die zweite Hilfsstromversorgung mit dem Ladeanschluss verbunden sind.

12. Ladestation nach Anspruch 11, wobei
zwei Ausgangsanschlüsse des Lademoduls über einen Schütz mit dem Ladeanschluss verbunden sind; zwei Ausgangsanschlüsse der zweiten Hilfsstromversorgung sind über ein Relais mit dem Ladeanschluss verbunden.

## Revendications

1. Système d'alimentation électrique pour une station de charge, comprenant un circuit d'alimentation électrique, une première alimentation auxiliaire (13) et un dispositif commandé par cible (14), dans lequel le circuit d'alimentation électrique comprend:
un module de commande (11) et un module marche-arrêt (12); **caractérisé en ce que** une première borne d'entrée de la première
la source d'alimentation auxiliaire (13) est directement connectée à une première phase du courant alternatif triphasé du réseau; une deuxième borne d'entrée de la première source d'alimentation auxiliaire (13) est directement connectée au fil neutre du réseau;
la première source d'alimentation auxiliaire (13) est conçue pour alimenter le circuit d'alimentation, et
une borne de commande du module marche-arrêt est reliée au module de commande (11); une borne d'entrée du module marche-arrêt (12) est reliée au moins à la première phase du courant alternatif triphasé du réseau; une borne de sortie du module marche-arrêt (12) est reliée à un dispositif commandé cible (14); le dispositif commandé cible comprend au moins l'un parmi un module de charge, une deuxième alimentation auxiliaire, un compteur d'électricité CC et un ventilateur.

2. Circuit selon la revendication 1, dans lequel le dispositif commandé cible (14) comprend une deuxième alimentation auxiliaire et un compteur d'électricité CC;
le module de mise en marche/arrêt (12) comprend un premier relais, et
une borne d'entrée du premier relais est reliée à la première phase du courant alternatif triphasé du réseau, et une borne de sortie du premier relais est reliée à une première borne d'entrée de la deuxième alimentation auxiliaire et à une première borne d'entrée du compteur d'électricité CC; une deuxième borne d'entrée de la deuxième alimentation auxiliaire et une deuxième borne d'entrée du compteur d'électricité CC sont reliées au fil neutre du réseau.

3. Système selon la revendication 2, le circuit d'alimentation comprenant en outre un disjoncteur à air; dans lequel,
les deux bornes d'entrée du disjoncteur sont respectivement reliées à la première phase du courant alternatif triphasé du réseau et au conducteur neutre du réseau; une première borne de sortie du disjoncteur est reliée à la borne d'entrée du premier relais; et une deuxième borne de sortie du disjoncteur est reliée à la deuxième borne d'entrée de la première alimentation auxiliaire, à la deuxième borne d'entrée de la deuxième alimentation auxiliaire et à la deuxième borne d'entrée du compteur d'électricité CC.

4. Système selon la revendication 3, dans lequel le premier relais est un relais AC et le disjoncteur est un disjoncteur avec protection contre les fuites.

5. Système selon la revendication 1, dans lequel le dispositif commandé cible (14) comprend en outre un module de charge, et le module de mise en marche/arrêt (12) comprend en outre un contacteur, dont
les trois bornes d'entrée sont respectivement connectées aux trois phases du courant alternatif triphasé du réseau; les trois bornes de sortie du contacteur sont connectées au module de charge.

6. Système selon la revendication 5, dans lequel le circuit d'alimentation comprend en outre un disjoncteur; dans lequel,
Les trois bornes d'entrée du disjoncteur sont respectivement reliées aux trois phases du courant alternatif triphasé du réseau; les trois bornes de sortie du disjoncteur sont respectivement reliées aux trois bornes d'entrée du contacteur.

7. Système selon la revendication 5, dans lequel le contacteur est un contacteur CA.

8. Système selon la revendication 3, dans lequel le dispositif commandé cible (14) comprend en outre un ventilateur; le module de commande marche-arrêt (12) comprend en outre un deuxième relais, dont
une borne d'entrée est reliée à la première borne de sortie du commutateur d'air, et dont une borne de sortie est reliée au ventilateur.

9. Système selon la revendication 8, dans lequel le deuxième relais est un relais CA.

10. Système selon la revendication 1, dans lequel le module de commande (11) comprend un contrôleur de chargeur hors-bord.

11. Station de charge, comprenant le système selon l'une quelconque des revendications 1-10 et un connecteur de charge; dans laquelle le module de commande, le module de charge et la deuxième source d'alimentation auxiliaire sont connectés au connecteur de charge.

12. Station de charge selon la revendication 11, dans laquelle deux bornes de sortie du module de charge sont reliées au connecteur de charge par l'intermédiaire d'un contacteur; deux bornes de sortie de la deuxième alimentation auxiliaire sont reliées au connecteur de charge par l'intermédiaire d'un relais.
